# EUROPÄISCHE PATENTSCHRIFT

(11) **EP 0 894 192 B1**
(45) Veröffentlichungstag und Bekanntmachung des Hinweises auf die Patenterteilung: **01.02.2006**
(21) Anmeldenummer: 97919318.2
(22) Anmeldetag: 04.04.1997
(51) Int. Cl.: F02M 55/02

(54) **KRAFTSTOFFEINSPRITZANLAGE MIT EINEM HOCHDRUCKLEITUNGSANSCHLUSS**
FUEL INJECTION APPARATUS WITH A HIGH-PRESSURE LINE UNION
DISPOSITIF D'INJECTION COMPRENANT UN RACCORDEMENT POUR CONDUITE SOUS HAUTE PRESSION

(30) Priorität: 16.04.1996 DE 19614982
(43) Veröffentlichungstag der Anmeldung: 03.02.1999
(73) Patentinhaber: Motorenfabrik Hatz GmbH & Co. KG, 94099 Ruhstorf (DE)
(72) Erfinder: KAMPICHLER, Günter, D-94099 Ruhstorf (DE); GEIER, Herbert, D-94099 Ruhstorf (DE)
(74) Vertreter: Grättinger & Partner (GbR)
(86) Internationale Anmeldenummer: PCT/EP1997/001680
(87) Internationale Veröffentlichungsnummer: WO 1997/039236

(56) Entgegenhaltungen:
- DE-B- 1 084 086
- FR-A- 2 216 455
- FR-A- 2 266 550
- PATENT ABSTRACTS OF JAPAN vol. 095, no. 011, 26.Dezember 1995 & JP 07 208297 A (NIPPONDENSO CO LTD), 8.August 1995,

## Beschreibung

Die Erfindung betrifft eine Kraftstoffeinspritzanlage mit einem Hochdruckleitungsanschluß zum dichtenden Verbinden einer an eine Einspritzpumpe angeschlossenen Druckleitung für die Zuführung von Kraftstoff mit einem Düsenhalter der Einspritzdüse, wobei das dem Düsenhalter zugeordnete Leitungsende der Druckleitung mit dem Düsenhalter verschraubt ist, so daß die Druckleitung in einen zur Einspritzdüse führenden Druckkanal des Düsenhalters mündet.

Die DE 19536459 A1 offenbart einen gattungsgemäßen Hochdruckleitungsanschluß. Üblicherweise wird das entsprechende Leitungsende der Druckleitung an einem Gewindehals des Düsenhalters mittels einer Überwurfmutter bzw. einem Flansch und einem angestauchten Dichtkegel hochdruckdicht angeschlossen. Dabei gelingt es mit hochwertigen Dichtungen und mit der Wirkung hoher Verbindungskräfte, eine dichtende Verbindung zu verwirklichen. Ein weiteres gattungsgemäßes Dichtprinzip wird in der DE 4307650 A1 beschrieben.

Die FR 226550 A beschreibt einen Düsenhalter, bei dem eine dichtende Hochdruckverbindung zwischen einer Kupplung und einer entsprechenden Aufnahme im Düsenhalter geschaffen werden soll. Die Dichtwirkung wird dadurch erzielt, daß flache Dichtscheiben beim Einschrauben der Kupplung verformt werden.

Demgegenüber besteht die Aufgabe der vorliegenden Erfindung darin, den werkstoff- und montageseitigen Aufwand für die Herstellung einer dichtenden Verbindung zwischen Druckleitung und Düsenhalter zu verringern und in einfacher Weise jede gewünschte Montageposition der Druckleitung gegenüber dem Düsenhalter zu erreichen.

Die vorstehende Aufgabe wird erfindungsgemäß durch die Merkmale des Anspruchs 1 gelöst. Vorteilhafte Ausführungsformen werden in den Unteransprüchen angegeben.

Mit der erfindungsgemäßen Lösung entfällt nicht nur die Verwendung einer Überwurfmutter, sondern auch das Anstauchen des Dichtkegels; stattdessen genügt ein einfaches Verbindungsstück aus gehärtetem Stahl, über welchem sich das zugeordnete Leitungsende der Druckleitung bei deren Eindrehen in die Gewindebohrung des Düsenhalters verformt. Im Ergebnis läßt sich dadurch ein Hochdruckleitungsanschluß zu deutlich niedrigeren Kosten bei kleinem Bauvolumen verwirklichen.

Das entsprechend der Druckleitung bzw. dem Druckkanal im Düsenhalter durchbohrte Verbindungsstück ist bevorzugt entweder an einem oder beiden Enden konisch zulaufend ausgebildet. Über den Konus auf seiten der Druckleitung wird das Leitungsende beim Eindrehen der Druckleitung derart verformt, daß es den Raum zwischen einem verjüngten Halsteil des Verbindungsstücks und der Gewindebohrung dichtend abschließt. Durch einen dem erstgenannten gegenüberliegenden weiteren Konus des Verbindungsstücks gelingt es, die Gewindeverbindung zusätzlich abzudichten, indem dieser Konus mit einem entsprechenden Innenkonus am Ende der Gewindebohrung dichtend zusammenwirkt. Diese zusätzliche Dichtungswirkung kann alternativ auch dadurch erzielt werden, daß das Verbindungsstück an seinem inneren Ende eine ringförmige Schneidkante bildet, welche dichtend auf dem Boden der Gewindebohrung aufsitzt. Eine derartige Axialdichtung ist herstellungstechnisch besonders einfach zu verwirklichen.

Erfindungsgemäß ergibt sich auch eine Vereinfachung der Montage. Das Leitungsende der Druckleitung wird in die Gewindebohrung des Düsenhalters gegen das Verbindungsstück eingeschraubt bis zum Erreichen eines Mindestdrehmoments, mit welchem bereits die erforderliche Abdichtung erzielt wird. Danach wird bei ansteigendem Drehmoment die Druckleitung weitergedreht bis die Montageposition bezüglich des Düsenhalters erreicht ist. Bei diesem Weiterdrehen wird das entsprechende Leitungsende der Druckleitung zunehmend verformt, wobei die gewählte Gewindesteigung den Verformungseigenschaften der Druckleitung anzupassen ist. Geeignet ist beispielsweise eine Gewindesteigung von 0,75 mm, wobei die Druckleitung aus einem Stahl St. 30 Al besteht. Demgegenüber besteht das Verbindungsstück aus gehärtetem Stahl, z.B. von 55 HRC nach der Rockwell-Skala. Entsprechend der für die Montage eingestellten Eindreh-Endposition, welche vorteilhaft mittels einer geeigneten Montagevorrichtung sichergestellt wird, läßt sich das Verbundteil aus Druckleitung und Düsenhalter auf einfache Weise montieren. Dabei ist zu beachten, daß ein Verformungsbereich sichergestellt wird, der nach Erreichen einer ersten Dichtposition, die durch ein Mindestdrehmoment gekennzeichnet ist, noch ein weiteres Eindrehen der Druckleitung in die Gewindebohrung des Düsenhalters von bis zu einer vollen Umdrehung ermöglicht. Dadurch gelingt es, sämtliche denkbaren Drehlagen für die Druckleitung gegenüber dem Düsenhalter sicherzustellen und damit jede gewünschte Montagestellung zu verwirklichen.

Im Folgenden werden Ausführungsbeispiele der Erfindung anhand der Zeichnung erläutert. Es zeigt
- Fig. 1: in vergrößerter Darstellung einen Längsschnitt durch den Hochdruckleitungsanschluß in einer ersten Dichtposition,
- Fig. 2: den Längsschnitt gemäß Fig. 1 in einer zweiten, der Montageposition entsprechenden Dichtposition und
- Fig. 3: eine weitere Ausführungsform in der Montageposition.

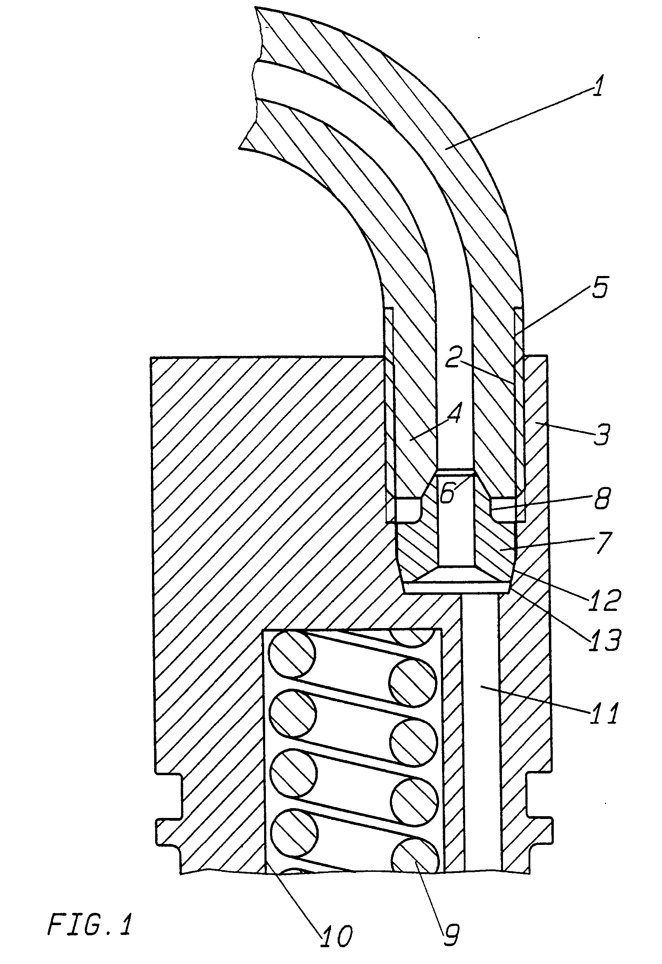

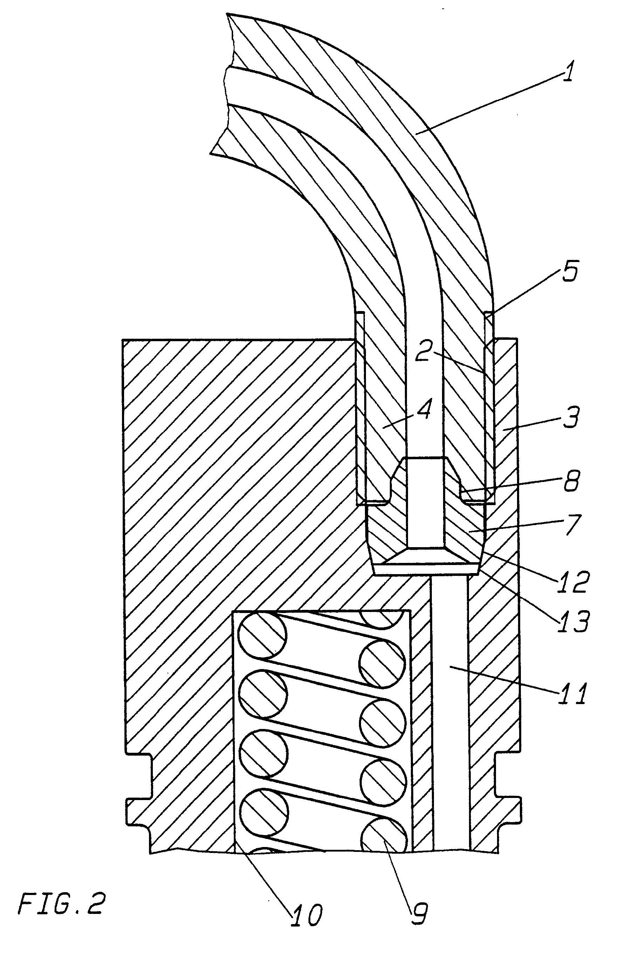

Gemäß den Fig. 1 und 2 erfolgt das Eindrehen einer Druckleitung 1 in eine Gewindebohrung 2 eines Düsenhalters 3 in zwei Stufen, nämlich bis zum Erreichen einer ersten Dichtposition gemäß Fig. 1 und dann weiter bis zur Endposition gemäß Fig. 2. Zu diesem Zweck besitzt das dem Düsenhalter 3 zugewandte Leitungsende 4 der Druckleitung 1 ein Außengewinde 5, mit welchem die Druckleitung 1 in die Gewindebohrung 2 bis zum Erreichen eines Mindestdrehmoments eingeschraubt wird. In dieser Eindrehposition, welche in Fig. 1 dargestellt ist, sitzt die Druckleitung 1 mit einem Innenkonus 6 im Bereich des Leitungsendes 4 auf einem entsprechenden Konus eines Verbindungsstücks 7 dichtend auf. Ein an den Konus anschließender Hals 8 des Verbindungsstücks 7 bietet noch Spielraum für das weitere Eindrehen des Leitungsendes 4 in die Gewindebohrung 2 des Düsenhalters 3. Dieser Spielraum ist gemäß Fig. 2 gewissermaßen ausgeschöpft. Dort ist die Druckleitung 1 in ihrer endgültigen Eindrehposition dargestellt, nämlich nach nahezu einer weiteren Umdrehung bis zum Erreichen der räumlich vorgegebenen Drehlage für die Endmontage des Düsenhalters 3. In dieser Drehlage kann das andere, nicht dargestellte Ende der Druckleitung 1 an die Einspritzpumpe angeschlossen werden.

In Fig. 2 sind entsprechende Teile mit denselben Bezugszeichen wie in Fig. 1 bezeichnet. Eine Druckfeder 9 sitzt in einer Aufnahmebohrung 10 des Düsenhalters 3; sie hält die nicht dargestellte Düsennadel in der Schließposition der Einspritzdüse.

Das Verbindungsstück 7 ist entsprechend dem Leitungsquerschnitt der Druckleitung 1 bzw. des Druckkanals 11 des Düsenhalters 3 durchbohrt. Es besitzt an seinem inneren Ende einen weiteren Konus 12, welcher einem das zugeordnete innere Ende der Gewindebohrung 2 verengenden Konus 13 entspricht. Die beiden Konusflächen verkeilen sich miteinander unter dem Einschraubdruck der Druckleitung 1 und verbessern damit den Dichtungseffekt.

Durch geeignete Werkstoffwahl sowohl auf seiten des Verbindungsstücks 7 als auch auf seiten der Druckleitung 1 wird erreicht, daß sich das innere Leitungsende 4 der Druckleitung 1 mit zunehmendem Eindrehen des Leitungsendes 4 in die Gewindebohrung 2 über das Verbindungsstück 7 aus gehärtetem Stahl verformt, wodurch sich eine zuverlässige Abdichtung im Bereich der Gewindeverbindung einerseits sowie zwischen den aufeinandertreffenden Konusflächen andererseits einstellt. Dabei ist das Material der Druckleitung bevorzugt so zu wählen, daß letztere eine hinreichende Verformbarkeit aufweist. Dadurch wird eine Verformung des Endes der Druckleitung über den Hals 8 des Verbindungsstücks 7 ermöglicht, bis die endgültige Drehposition der Druckleitung 1 erreicht ist. Dabei ist es zweckmäßig, die Anforderungen an den Verformungsgrad der Druckleitung dadurch zu begrenzen, daß eine geringe Gewindesteigung gewählt wird, welche bevorzugt kleiner 1 mm ist.

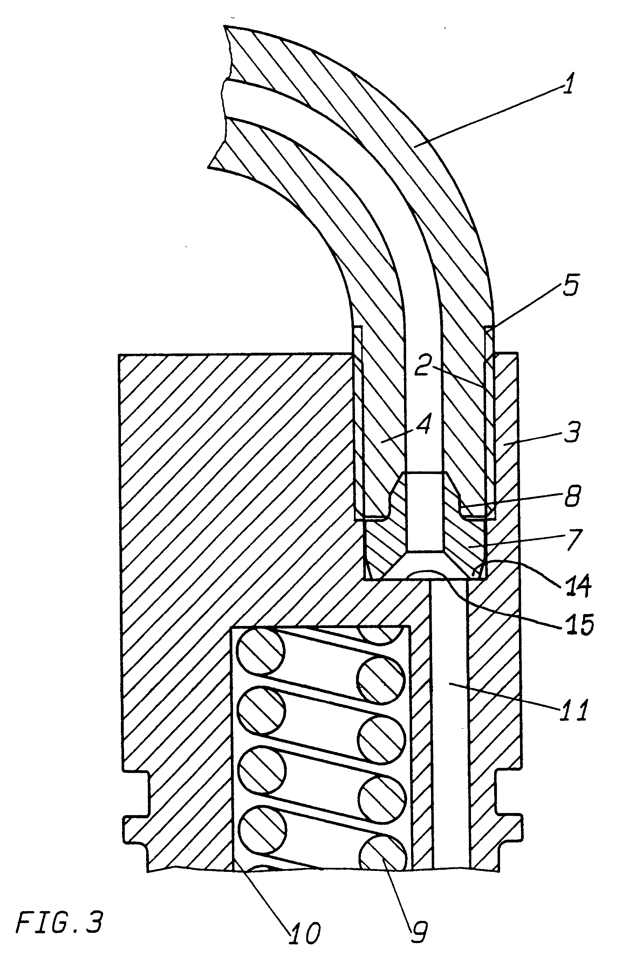

Die Ausführungsform gemäß Fig. 3 unterscheidet sich von jener gemäß den Fig. 1 und 2 dadurch, daß der das untere Ende der Gewindebohrung 2 verengende Konus 13 entfällt. Stattdessen wird dort der Dichtungseffekt erhöht durch eine Schneidkante 14 am unteren Ende des Verbindungsstücks 7. Durch die auf das Verbindungsstück 7 ausgeübte Axialkraft wird die Schneidkante 14 dichtend auf den Boden 15 der Gewindebohrung 2 aufgepreßt.

## Patentansprüche

1. Kraftstoffeinspritzanlage mit einem Hochdruckleitungsanschluß zum dichtenden Verbinden einer an eine Einspritzpumpe angeschlossenen Druckleitung (1) für die Zuführung von Kraftstoff mit einem Düsenhalter (3) der Einspritzdüse, wobei das dem Düsenhalter zugeordnete Leitungsende (4) der Druckleitung (1) mit dem Düsenhalter (3) verschraubt ist, wobei die Druckleitung (1) in einen zur Einspritzdüse führenden Druckkanal (11) des Düsenhalters (3) mündet, wobei die Druckleitung (1) am Leitungsende (4) ein Außengewinde (5) aufweist, mit welchem sie in eine Gewindebohrung (2) des Düsenhalters (3) eingeschraubt ist und wobei sich zwischen dem Leitungsende (4) und dem inneren Ende der Gewindebohrung (2) ein in Strömungsrichtung durchbohrtes Verbindungsstück (7) befindet,
**dadurch gekennzeichnet,**
**daß** das Verbindungsstück (7) an seiner dem Leitungsende (4) der Druckleitung (1) zugekehrten Seite einen Hals (8) mit gegenüber dem Innendurchmesser der Gewindebohrung (2) geringerem Durchmesser aufweist, derart daß das Leitungsende (4) beim Eindrehen der Druckleitung (1) über das Verbindungsstück (7) verformt wird, so daß es den Raum zwischen dem verjüngten Hals (8) und der Gewindebohrung (2) dichtend abschließt, wobei das Außengewinde (5) am Leitungsende (4) der Druckleitung (1) eine geringe Steigung aufweist, die kleiner oder gleich der Halslänge ist.

2. Kraftstoffeinspritzanlage nach Anspruch 1,
**dadurch gekennzeichnet,**
**daß** die Gewindesteigung des Außengewindes (5) der Druckleitung (1) < 1 mm beträgt.

3. Kraftstoffeinspritzanlage nach Anspruch 1 oder 2,
**dadurch gekennzeichnet,**
**daß** die Druckleitung (1) im Bereich ihres Leitungsendes (4) konisch aufgebohrt ist.

4. Kraftstoffeinspritzanlage nach Anspruch 3,
**dadurch gekennzeichnet,**
**daß** das der Druckleitung (1) zugekehrte Ende des Verbindungsstückes (7) entsprechend dem Endkonus (6) der Druckleitung (1) konisch ausgebildet ist.

5. Kraftstoffeinspritzanlage nach einem der vorangehenden Ansprüche,
**dadurch gekennzeichnet,**
**daß** die Gewindebohrung (2) im Düsenhalter (3) an ihrem inneren Ende einen sie verengenden Konus (13) aufweist.

6. Kraftstoffeinspritzanlage nach Anspruch 5,
**dadurch gekennzeichnet,**
**daß** das Verbindungsstück (7) entsprechend dem Konus (13) am Ende der Gewindebohrung (2) konisch ausgebildet ist.

7. Kraftstoffeinspritzanlage nach einem der Ansprüche 1 bis 4,
**dadurch gekennzeichnet,**
**daß** das Verbindungsstück (7) an seinem inneren Ende eine ringförmige Schneidkante (14) bildet, welche dichtend auf dem Boden (15) der Gewindebohrung (2) aufsitzt.

8. Kraftstoffeinspritzanlage nach einem der vorangehenden Ansprüche,
**dadurch gekennzeichnet,**
**daß** das Verbindungsstück (7) aus gehärtetem Stahl besteht, während die Druckleitung (1) aus einer Stahllegierung mit guten Verformungseigenschaften besteht.

## Claims

1. Fuel injection system with a high pressure line connection for sealingly connecting a pressure line (1) connected with an injection pump for the supply of fuel with a nozzle holder (3) of the injection nozzle, whereby the line end (4) of the pressure line (1) allocated to the nozzle holder is screwed into the nozzle holder (3), whereby the pressure line (1) opens into a pressure channel (11) of the nozzle holder (3) leading to the injection nozzle, whereby the pressure line (1) incorporates an external thread (5) at the line end (4), with which the same can be screwed into a threaded bore (2) of the nozzle holder (3), and whereby a connecting piece (7) drilled in the direction of the flow is located between the line end (4) and the internal end of the threaded bore (2), **characterised in that** the connecting piece (7) incorporates a throat (8) with a diameter that is smaller than the internal diameter of the threaded bore (2) at its side facing the line end (4) of the pressure line (1) in such a way that the line end (4) is deformed during inserting of the pressure line (1) via the connecting piece (7), so that the same sealingly closes the space between the tapered throat (8) and the threaded bore (2), whereby the external thread (5) incorporates a slight incline at the line end (4) of the pressure line (1), which is smaller than or equal to the length of the throat.

2. Fuel injection system according to Claim 1, **characterised in that** the thread pitch of the external thread (5) of the pressure line (1) is < 1 mm.

3. Fuel injection system according to Claim 1 or 2, **characterised in that** the pressure line (1) is conically drilled within the area of its line end (4).

4. Fuel injection system according to Claim 3, **characterised in that** the end of the connecting piece (7) facing the pressure line (1) is formed conically to match the end cone (6) of the pressure line (1).

5. Fuel injection system according to one of the preceding Claims, **characterised in that** the threaded bore (2) incorporates a cone (13) narrowing the same in the nozzle holder (3) at its internal end.

6. Fuel injection system according to Claim 5, **characterised in that** the connecting piece (7) is formed conically to match the cone (13) at the end of the threaded bore (2).

7. Fuel injection system according to one of the Claims 1 to 4, **characterised in that** the connecting piece (7) forms an annular cutting edge (14) at its internal end, which sealingly rests upon the floor (15) of the threaded bore (2).

8. Fuel injection system according to one of the preceding Claims, **characterised in that** the connecting piece (7) consists of hardened steel whilst the pressure line (1) consists of a steel alloy with good deforming characteristics.

## Revendications

1. Système d'injection de carburant avec un raccord pour conduite haute pression pour la liaison étanche d'une conduite sous pression (1) raccordée sur une pompe d'injection pour l'alimentation en carburant avec un porte-injecteur (3) de l'injecteur, l'extrémité (4) de la conduite sous pression (1) qui est associée au porte-injecteur étant vissée sur le porte-injecteur (3), la conduite sous pression (1) débouchant dans un canal sous pression (11) du porte-injecteur (3) qui conduit vers l'injecteur, la conduite sous pression (1) comportant sur son extrémité de conduite (4) un filetage (5) par lequel on la visse dans un taraudage (2) du porte-injecteur (3), une pièce de raccord (7) à perçage traversant dans le sens d'écoulement se trouvant entre l'extrémité de conduite (4) et l'extrémité intérieure du taraudage (2)
**caractérisé en ce que** sur son côté dirigé vers l'extrémité (4) de la conduite sous pression (1), la pièce de raccord (7) comporte un col (8) d'un diamètre inférieur au diamètre intérieur du taraudage (2), de façon à ce que l'extrémité de conduite (4) se déforme lorsqu'on engage la conduite sous pression (1) sur la pièce de raccord (7), de façon à fermer de façon étanche l'espace situé entre le col rétréci (8) et le taraudage (2), le filetage (5) présentant sur l'extrémité (4) de la conduite sous pression (1) un faible pas qui est inférieur ou égal à la longueur du col.

2. Système d'injection de carburant avec un raccord pour conduite haute pression selon la revendication 1, **caractérisé en ce que** le pas du filetage extérieur (5) de la conduite sous pression (1) est > 1 mm.

3. Système d'injection de carburant avec un raccord pour conduite haute pression selon la revendication 1 ou 2, **caractérisé en ce que** la conduite sous pression (1) comporte un alésage conique dans la région de son extrémité (4).

4. Système d'injection de carburant avec un raccord pour conduite haute pression selon la revendication 3, **caractérisé en ce que** l'extrémité de la pièce de raccord (7) qui est dirigée vers la conduite sous pression (1) est conçue sous forme conique, en correspondance avec le cône terminal (6) de la conduite sous pression (1).

5. Système d'injection de carburant avec un raccord pour conduite haute pression selon l'une quelconque des revendications précédentes, **caractérisé en ce que** le taraudage (2) dans le porte-injecteur (3) comporte sur son extrémité interne un cône (13) qui se rétrécit.

6. Système d'injection de carburant avec un raccord pour conduite haute pression selon la revendication 5, **caractérisé en ce que** la pièce de raccord (7) est conçue sous forme conique, en correspondance avec le cône (13) sur l'extrémité du taraudage (2).

7. Système d'injection de carburant avec un raccord pour conduite haute pression selon l'une quelconque des revendications 1 à 4, **caractérisé en ce que** sur son extrémité interne, la pièce de raccord (7) forme une arête coupante annulaire (14) qui repose de façon à assurer l'étanchéité sur le fond (15) du taraudage (2).

8. Système d'injection de carburant avec un raccord pour conduite haute pression selon l'une quelconque des revendications précédentes, **caractérisé en ce que** la pièce de raccord (7) est en acier trempé, alors que la conduite sous pression (1) est en un alliage d'aluminium possédant de bonnes caractéristiques de déformation.
